# EUROPEAN PATENT APPLICATION

(11) **EP 1 544 707 A1**
(43) Date of publication of application: **22.06.2005**
(21) Application number: 03405896.6
(22) Date of filing: 15.12.2003
(51) Int. Cl.: G06F 1/00, H04L 29/06

(54) **Network security system**

(71) Applicant: ABB RESEARCH LTD., 8050 Zürich (CH)
(72) Inventor: Naedele, Martin, 8050 Zürich (CH); Biderbost, Oliver, 8624 Grüt (CH)
(74) Representative: ABB Patent Attorneys

(57) **Abstract**

The inventive IT Security System for intrusion detection in a private network, which is connected to a public network, comprises a processing system, a supervisory system and an interface system. The processing system detects intrusion or unwanted access of resources on a private network and alerts in case of a detected intrusion or unwanted access of resources by creating quantitative alert data. The supervisory system automatically processes the alerts or presents the alerts to a security system operator. The interface system transfers the alerts from the processing system to the supervisory system.

Available data about network activity can thus be presented to the operator in an intuitive and non-technical manner. If the operator suspects the security of the network to be compromised he can safely isolate the private network from the outside world, as simple reaction to any threat endangering the private network environment.

## Description

### Field of the Invention

The invention relates to the field of network security and intrusion detection in computer networks.

It relates to a network security system for detecting security relevant irregularities in a network and to an automation system operator workstation that is connected to such a system.

### Background of the Invention

Network security and intrusion detection in general computer networks have been much-discussed topics for quite some time now. Much research has been done about ways to keep unauthorized users out of private networks and detect intrusion or unwanted access of resources on these networks. A problem persisting from the beginning has been that every system to automatically detect intrusion or malicious use was either missing many attacks or suffered from high false alarm rates. This has constituted the need for security specialists assessing generated alarms or auditing log files.

In process control environments the notion of computer security is also relevant. With the integration of TCP/IP local area networks in process control systems and their connection to other corporate networks and the Internet it has grown even more important. Findings in general network security and intrusion detection research also apply to automation environments but there are additional characteristics that might simplify the detection of attacks and reactions to them.

One feature specific to process control systems is often a rather static setup with very restricted and well defined traffic inside the network and across the border, which might be used to reduce the amount of possible attacks to be considered.

Furthermore in automation environments operators dedicated to the task of monitoring the process are available often round-the-clock. These operators do not normally have IT security know-how, but, none the less, one could take advantage of these people by incorporating them into network security and the decision making process in a way that requires no special technical knowledge.

### Description of the Invention

It is therefore an object of the invention to create a security system of the type mentioned initially, which will enable an operator without IT security know-how to monitor network activity in a private network and respond with the appropriate measures to any possible irregularities.

These objects are achieved by a security system according to claim 1.

The inventive network security system for detecting security relevant irregularities in a network comprises data sources located on and/ or constituting the network, with means for generating network-security relevant data; an input module, with input handlers for various protocols to connect to the data sources; one or multiple processing modules, connected to said input module for access to said data sources, with means for translating said network-security relevant data into quantitative variables; a supervisory system, with means for presenting these variables to an automation system operator; and an interface module, with means for transferring said quantitative variables from the processing module to the supervisory system.

Available data about network activity can thus be presented to the operator in an intuitive and non-technical manner as quantitative variables. If the operator suspects the security of the network to be compromised due to a sudden change in pattern (increase, decrease, oscillation, etc.) of one of the variables, he can initiate appropriate countermeasures, e.g. isolating the private network from the outside world, as simple reaction to any threat endangering the private network environment.

Further advantages derive from the depending claims.

### Brief Description of the Drawings

The subject matter of the invention will be explained in more detail in the following text with reference to the attached drawings, in which:
- Fig. 1: shows a screen shot of the inventive security system;
- Figs. 2 and 3: schematically show a system architecture overview;
- Fig. 4: shows a sample message processing cycle; and
- Fig. 5: shows a screen shot with scanning activity and a change in the number of logged in users.

### Detailed Description of Preferred Embodiments

To simplify the task of detecting and reacting to attacks without requiring the operator to have thorough knowledge of IT Security to sort out the often huge amount of false positives one can take advantage of the special characteristics often found in process control networks:

Presently existing process control networks often have a fairly static setup. Every device connected to the network is known and dedicated to fulfill a fixed task. The hosts on the network all run a small set of well defined services, and connect to few also well known services on other hosts on the network or outside. The usage of services and connections on the network are known in advance, and unlikely to change fast. There are also few-to-no accesses of services from outside the network. At the least the allowed origins of such requests are known in advance. Also information transferred across the border of the network can potentially be restricted to content of exclusively static nature. That is, for example web pages and construction blueprints, but no executable code or scripts.

The restriction to only few well-defined services and the predictability of usage and network traffic allows narrowing the attack space that has to be taken into consideration drastically.

Most of the common attacks occurring on the Internet today performed by exploiting known or novel server vulnerabilities can be neglected entirely, simply because the respective services that are attacked don't run inside the process control network.

Attacks exploiting vulnerabilities of client applications inside the network accessing resources on the outside are not an issue either, because the services accessed outside the network are known in advance and provide only static content. This eliminates scripting attacks, email worms and the like.

Due to the clearly defined (small) set of known, necessary traffic most attack attempts can be simply detected as bad traffic or port activity.

Rule based Network Intrusion Detection Systems (RBIDS) can be used to detect most of the known attack signatures. Under the given circumstances these systems, that are usually prone to high false alarm rates, can be tuned to have a much better accuracy because of the predictability of the allowed network traffic. A minimum rule set can be used for decidedly malicious or harmful activity. Alarms triggered by potentially inoffensive traffic, that account for the biggest part of the false positives are not to be neglected totally (one would go completely unaware of perhaps serious activity) but can be processed in a quantitative manner, for example as trends.

Statistical Intrusion Detection Systems can be used to scan for statistically unusual activity and thus potentially detect novel attacks, unknown to signature based Systems. These systems also perform better (with less false alarms) when deployed in environments with rather static activity patterns. Furthermore, the alarm firings may also be treated in a quantitative manner.

Logins or attempted access to login services and accounts on the networked hosts are accurately classifiable. Because permitted sources, destinations, accounts or even times are known in advance it is easy to distinguish which logins are allowed and what constitutes an attack or at least a security breach.

Malicious activity occurring on a computer network that represents a potential threat can be distinguished on the basis of the reason for which the activity occurs. In this sense malicious activity can be grouped into three classes. These classes of attacks result in different indications that may be observed by the operator and allow him to take actions appropriate to the threat at hand.

The first class consists of probes and mapping attempts. This kind of activity is also known as pre attack recognition and serves the purpose of gathering topology and vulnerability information about the network to be attacked. It consists of automated vertical and horizontal scanning to discover hosts that might exhibit certain well known vulnerabilities or otherwise attractive targets like mail or DNS servers.

These activities are on the one hand hard to detect. Possible effects observable by the operator are a potential increase or other change in overall traffic at the filtering router with peaks or patterns in the corresponding trend display. Changes in port distribution and deny rule firings due to blocked ports are likely, and furthermore there may be Alarms from the rule-based IDS scan detection or a general increase in statistical IDS anomaly trends.

On the other hand, since these signs of pre attack recognition are the first thing to be seen of an upcoming attack (and sometimes the last thing before it gets really serious) the operator should pay close attention at them. Because, however, this activity in itself is not threatening and sometimes quite common, it would be premature to cut the network connection at this time. But the operator should be alarmed and watch for subsequent suspicious and possibly more harmful events.

Thus, with the help of the system may be able to detect attacks in its earliest stages by looking closely to events that would, in an other environment, go completely unnoticed.

The second class of attack is known as Denial of service (DOS) and comes in different forms. One form is in terms of flooding a service, a host or an entire network by sending huge amounts of data to the target, hoping it will fail to cope with it, either from a single attacking host or distributed from as many attacking machines as possible. The other way is to exploit a certain known vulnerability of a service on the target, and sending specially crafted data that will for some reason crash the service. The purpose is sometimes to cover other attacks but most often just to render the service inaccessible for legitimate use.

Whereas the former method is easily detected by the human operator as an enormous increase of overall traffic, the latter is harder to detect. It often results in nothing but few denied packets or the RBIDS detecting a known attack. A successful attack is always obvious because of the outage or failure of the targeted service.

By looking at the traffic levels all over the network the operator sees if the router successfully manages to filter out the flooding traffic. Only when the traffic enters the network or reaches dangerous levels the operator should disconnect the network from the outside by hitting the red button to protect the process network.

### Intrusion

The third class of attack is the actual intrusion into a network, aimed subversion of hosts or services with the purpose of obtaining some sort of control over resources on the network. There is a wide range of possibilities of how these attacks are performed, but they mostly consist of exploiting a hole in the security due to one or several vulnerabilities or miss-configuration of hardware or software on the target. The vast majority of attacks of this kind consist of known attacks directed against known vulnerabilities. If the rule-base of the IDS is up-to-date the operator can identify these attacks or attack attempts when seeing rule firings of the IDS. More of a problem are novel attacks against newly found and not yet known vulnerabilities. The only indication for them is a possible anomaly in some system variable. An other sign for intrusion attempts are logins and accesses to services from origins that are not known or not allowed to use them.

In the case of an attempted but unsuccessful intrusion the operator may react by either cutting the connection depending on how far into the network the attacker seems to have entered. In the case of an intrusion successful in accessing any kind of non-intended resource, or if the safety of the process is in any danger, immediate disconnection of the network, and alarming of specialized IT security staff is a possible reaction.

In all cases the human operator will be able to detect an attack in progress and is able to react properly and timely.

As has already be stated, in control environments one can rely on a process operator that is available often round-the-clock or at least whenever the process is running (which often amounts to the same), watching and controlling the process. These people are often highly specialized in the field of the workings of the process, but generally do not have thorough insight into IT security concepts. If however security data can be presented to them in a neutral and intuitive way they can be integrated into decision making about detecting dangerous activity and isolating the network from the outside world as a reaction. A human operator can make decisions by simply watching suspicious activity in progress and intuitively detect patterns and correlated sequences.

Since the human operator has to be able to decide about the severity of the overall situation on the network without the knowledge of an IT security expert, data that is presented to him has to be restricted to simple consistent principles. There is no use in presenting to him for example an alert of the IDS directly, with detailed information about the characteristics of the network traffic that caused the IDS to trigger the alarm. Everything has to be translated to indications and language he understands.

Looking now at the functionality of the inventive security system:

The restriction to only few well-defined services and the predictability of usage and network traffic allows to considerably narrow down the types of attacks a process control system has to be defended against:

Most of the common attacks occurring on the Internet today performed by exploiting known or novel server vulnerabilities can in this case be neglected entirely, simply because the respective services that are attacked (e.g. SMTP, IRC, etc) do not run inside the process control network.

Attacks exploiting vulnerabilities of client applications inside the network accessing resources on the Internet are not an issue either, if the services accessed outside the network are known in advance and restricted by technical and/or administrative means to provide only static content.

Due to the clearly defined and small set of known and necessary traffic most attack attempts can be simply detected on the IP address/port level without having to go into content inspection.

Rule based Network Intrusion Detection Systems can be used to detect most of the known attack signatures. Under the given circumstances these IDSs, which are usually prone to high false alarm rates, can be tuned to a small rule set and will have a much better accuracy because of the predictability of the allowed network traffic. Assuming that the remaining alarms are mostly mostly meaningful, they can be processed in a quantitative manner, for example as trends.

In addition, statistical Intrusion Detection Systems can be used to scan for statistically unusual activity and thus potentially detect novel attacks, unknown to signature based systems. These systems also perform better, that is, with less false alarms), when deployed in environments with rather static activity patterns. Furthermore, the alarm firings may also be treated in a quantitative manner.

Due to the small circle of legitimate users and their deterministic login behavior, e.g according to shift changes, unusual login events are with high probability security critical.

Quantitative data carrying meaningful information about the state of the IT part of the process control system and potential security events can be obtained from routers, switches, proxies, host and application logs and performance counters, as well as a statistical IDS. Also the output of security mechanisms that would normally produce detailed qualitative event information, such as rule-based IDSs or firewalls can be aggregated into quantitative, trendable data.

Relevant state variables include, but are not restricted to:
(Filtering) routers, firewalls, proxies, and reverse proxies: Incoming/outgoing traffic per unit time, passing and rejected, per protocol, per source address, per destination address, per rule; user login and (rule) management activities; authentication failures.
Network/switch: Total traffic, per protocol, per source address, per destination address, as percent of available bandwidth.
NIDS: Rule firings per unit time, per rule; dropped traffic per unit time; user login and (rule) management activities; authentication failures; time of most recent rule update.
Hosts: User login (number, account, privilege) and (rule) management activities; authentication, authorization failures; processor load; uptime; disk space; Security/audit events.
Applications (e.g. web servers): Authentication successes and failures; connection attempts per unit time; failed requests;

Since the human process operator has to be able to decide about the severity of the overall situation on the network without the knowledge of an IT security expert, data that is presented to him has to be restricted to simple, consistent principles. There is no use in presenting to him for example an alert of the IDS directly, with detailed information about the characteristics of the network traffic that caused the IDS to trigger the alarm. Everything has to be translated to indications and language he understands. The following principles on how to present event data to a process operator have been followed in the prototype implementation:

Explicit alarms and operator messages should be shown only for events with very low frequency. From his experience with the production process an operator is used to the fact that an alarm message indicates that there is something seriously wrong with the process and requires immediate action. If he is now seeing an alarm about events of uncertain relevance every other minute, he will simply start to ignore them.

Events with high frequency should not be shown to the operator as a textual message, neither should events, which have high false alarm rates. Such events should rather be treated quantitatively. They can be counted - perhaps weighted with their severity - and then shown to the operator as graphical trend charts that show the overall level of suspicious activity of a certain type. Here a high frequency and uniform distribution are even desired, because it makes peaks or bursts of additional events more easily detectable for the human eye.
Alarm messages shown to the operator should be very precise not with respect to cause in the form of a cryptic IDS alert message, but with respect to the consequence/danger for the system. To give an example: A message like
An unknown user has successfully accessed a critical service on the local network
is rather easy to understand, whereas a message such as
ICMP L3retriever Ping [Classification: Attempted Information Leak] [Priority: 2] {ICMP} 10.1.2.3 -> 10.4.5.6
doesn't have much of a meaning to the operator.

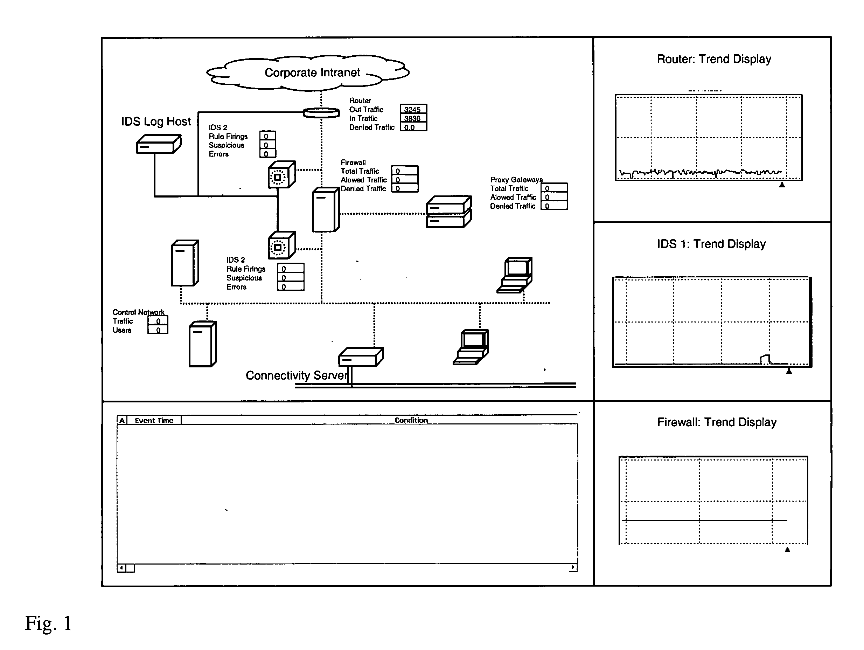

The security relevant information is presented to the process operator in the form of a process picture, where in this case the "process" is the information system of the process control system (see Fig. 1). The process picture is annotated with numerical and color/icon-coded information about the current process/system state. Chart displays visualize historical trends in important parameter values over different time spans. The operator thus uses exactly the same SW environment and the same conceptual monitoring paradigms for the information system security process as for the production process.

Possible reactions of the operator to detected anomalies include: Isolation of network segments, alerting expert IT security staff, powering off of certain devices, switching to backup systems, reinstallation of data and applications, start of an antivirus scanner - not running continuously in this environment due to concerns of non-deterministic performance decreases, or even shutdown of the plant. These reactions should be predefined and preconfigured, and made available to the operator via buttons on the user interface.

Looking now at the Implementation of the inventive security system:

The architecture of the prototype should allow a wide variety of input data sources, flexible handling of inputs and processing, and rely as much as possible on existing tools.

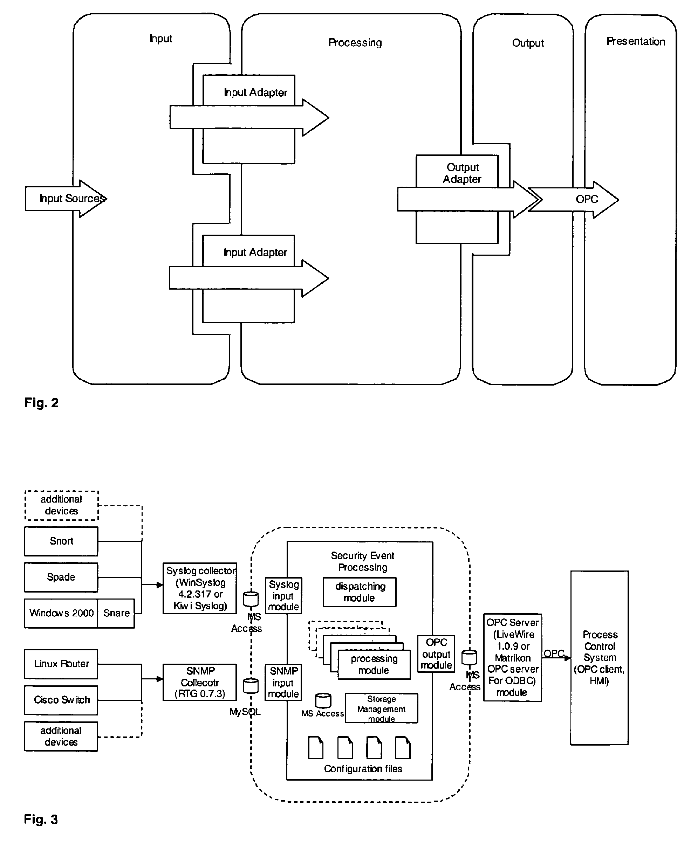

These requirements led to the inventive security system with the multi-tier architecture schematically presented in Figs. 2 and 3.

[Data generation] Many different data sources are possible, as described above. In the prototype we used the traffic rates on a Linux host configured as router and a Cisco Catalyst 2926 switch, selected messages from the Windows 2000 event log converted to Syslog via Intersect Alliance SNARE, and the alert firing rate of a Snort IDS with the Spade statistical IDS.

[Input handling] Arbitrary protocols can be supported for pull and push data gathering, each via a combination of an off-the-shelf data gathering tool and a custom input module. The prototype supports Syslog and SNMP. The input modules normalize the incoming information for use in the processing modules.

[Processing] The processing modules convert raw input data into (quantitative) information to be presented to the user.

[Output handling] To bridge the protocol gap between IT systems and process control systems, the security status information is made available as OPC variables. OPC-DA \cite{OPC}, which is Microsoft (D)COM based, is the leading vendor neutral standard protocol for exchanging information within automation systems. The OPC output module could be replaced by a different output module e.g. for web based thin client presentation of the system state, or for using the new XML web service protocol OPC-XML-DA instead of OPC-DA via DCOM.

[Presentation] The actual and historical values of the security relevant OPC variables are presented on a process picture in the human machine interface of the process control system. The trend chart facility of the process control system allows zooming in and out to visualize patterns on e.g. hourly, daily, weekly, or monthly basis. The network and device structure is preferably schematically depicted on the user interface. Visual elements denote security status by means of coloring and/ or numerical and/ or textual annotations. The user may access additional information about the security status such as message logs or trend graphs by selecting said visual elements, e.g. by right-clicking with a computer mouse. The presentation tier also includes input means to initiate countermeasures.

The input and processing modules are written in C# on Microsoft dotnet 1.1. The different tiers of the prototype are decoupled from each other via databases. While this may not be the most performant solution for a final product, it is a convenient and flexible mechanism for the prototype, in particular as the off-the-shelf data gathering tools like RTG for SNMP and WinSyslog for Syslog use databases by default.

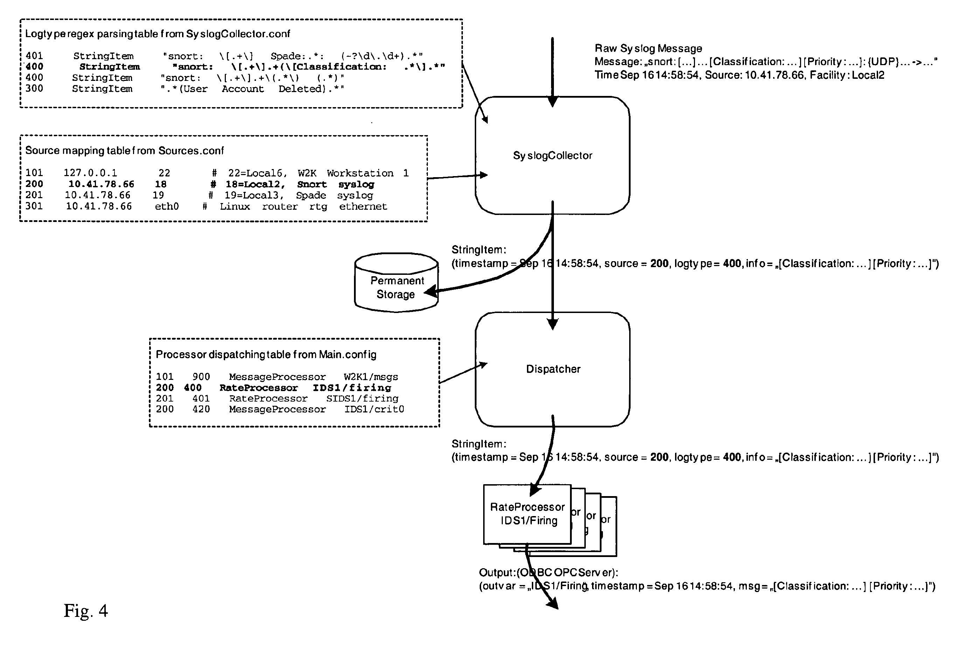

After a configurable waiting period the system starts a processing cycle. The processing cycle consists of polling all the inputs and processing the resulting messages. Fig. 4 shows in more detail how the custom part of the system processes incoming messages. It also demonstrates the extension points in the application where functionality can be added or changed simply by modifying the configuration files without having to recompile any part of the framework:

A data source, here for example the Snort NIDS, submits security state relevant information, e.g. about a rule firing, via the Syslog protocol to the Syslog server, which writes it into an ODBC database. These two steps outside the custom processing system are not shows in the figure. Now the Syslog input module now polls the database and retrieves the entry.

In a first regular expression matching step the input module determines the logical type of the incoming message.

In a second matching step the Syslog facility info and the IP address of the source device are mapped to a logical source identifier.

The last processing step of the input module is to create a data carrying object, which it passes to two destinations: To the storage module, which maintains a revolving log of all received messages for in depth analysis in case of an incident handling procedure, and to the message processing dispatcher.

The dispatching module determines from the logical message type and source the processing module instance(s) the message has to be sent to and which OPC variable to modify. As the framework uses exclusively the abstract interfaces for access and reflection for object lifecycle management, new processing modules can be added to the system simply by making the dotnet class available and adding the necessary mapping lines in the Main.Config file. Each processing module is via special method calls informed about the start and end of each processing cycle. This allows the processing modules to not only process each single message that is passed in, but also to treat the messages of each processing cycle as a batch, e.g. to calculate rates (events per time) or to remove duplicates received within the processing cycle.

The processing module(s) instruct the OPC Server wrapper which OPC variable has to be set to which value as result of the processing.

The tested prototype system consists of four types of processing modules:

[Value] The "value" module extracts a numerical value from the incoming message and sets the corresponding output (OPC) variable to this value. This processing module is used for data sources like processor load or host uptime.

[Message] The "message" module maps the incoming message to a text template and fills the variable parts in this template with information extracted from the incoming message. This processing module is used for input messages like system startup/shutdown (indicating the system concerned), account and policy management operations as well as login failures (indicating the account concerned). The resulting composed message string is passed to the output variable.

[Increment/decrement] The "increment/decrement" module maintains a numerical state based on state change messages. It reads, modifies, and writes the associated output variable. This processing module is used for input messages informing about user login/logout.

[Rate] The "rate" module calculates events per unit time from a batch of event notifications received in a configurable time period which may or may not be identical to the processing cycle time. This processing module is used to calculate (S)IDS firing rates as well as router traffic rates from information about the accumulated amount of packets that have passed/been rejected by the router.

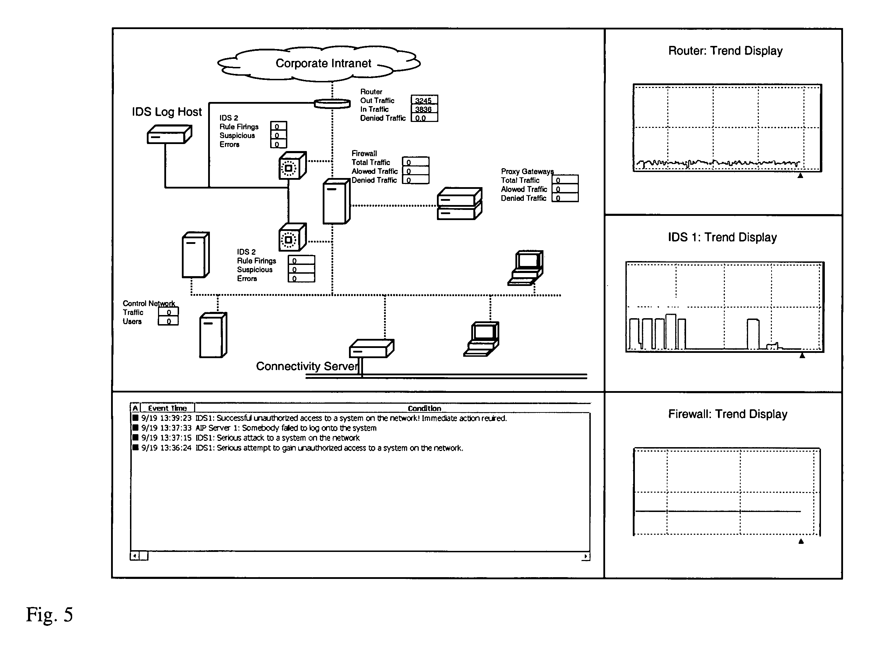

The tested prototype tool has proven that various vulnerability scans that an attacker is likely to execute (e.g. using tools like nmap or nessus) produce distinctive anomaly patterns (see Fig. 5). Similarly clear patterns are expected for worms and other denial-of-service attacks. When the prototype was connected to the corporate intranet traffic patterns changing over the day due to regular system management activities by a corporate IT group have been observed.

A concept and prototypical implementation has been developed to collect and present information system security relevant parameters, events, and alarms, collected by a variety of devices in the automation network in the form of quantitative trends that a non-IT-expert process operator is used to from his main activity - monitoring the production process - and therefore feels comfortable interpreting. In addition, using the human mind as pattern matcher and relevance evaluator, overcomes some of the problems with false positives in conventional intrusion detection systems.

## Claims

1. Network security system for detecting security relevant irregularities in a network, comprising
data sources located on and/ or constituting the network, with
means for generating network-security relevant data;
an input module, with
input handlers for various protocols to connect to the data sources;
at least one processing module, connected to said input module for access to said data sources, with
means for translating said network-security relevant data into quantitative variables; a supervisory system, with
means for presenting processed data to a security system operator; and
an interface module, with
means for transferring said quantitative variables from the processing module to the supervisory system.

2. Security system as in claim 1, **characterized in, that**
said data sources comprise routers, firewalls, hosts, applications, switches, NIDS, HIDS or any combination thereof.

3. Security system as in any of claims 1 or 2, **characterized in, that**
the network-security relevant data consists of
numerical values maintained via increment/decrement operations, rate calculations, pass-through of values or evaluation of mathematical expressions involving multiple values or any combination thereof, and /or
textual values maintained via template matching, text transformation, text translation, and composition of text from templates, text strings from incoming data and numerical values from incoming data or any combination thereof.

4. Security system as in any of claims 1 or 3, **characterized in, that**
said supervisory system comprises
means for displaying said variables to an system operator, and
reaction facilities with means for initiating predefined countermeasures.

5. Security system as in any of claims 1 to 4, **characterized in, that**
the processing modules act on individual incoming data messages and batches of those messages.

6. Security system as in any of claims 1 to 5, **characterized in, that**
the displaying means display the security status/health information as quantitative trend graphs with historical data storage and zoom in/out function.

7. Security system as in any of claims 1 to 6, **characterized in, that**
the displaying means display a schematical depiction of the network and device structure and topology.

8. Security system as in claims 7, **characterized in, that**
the visual elements denote security status by means of coloring and/or numerical and/or textual annotations

9. Security system as in any of claims 1 to 8, **characterized in, that**
the system further comprises
storage means for maintaining temporary and persistent records of the results of the processing steps for later in-depth analysis.

10. Automation system operator workstation in a network with an automation system, comprising
means for controlling the processes of the automation system over the network, said controlling means comprising a human machine interface with means for displaying information about the automation system to an automation system operator and means for entering commands for controlling the automation system,
said automation system operator workstation being connected to a security system as claimed in any of the preceding claims, wherein
the supervisory system is integrated into the automation system controlling means,
said status and trend presenting means being included in the information displaying system of the human machine interface, and said countermeasures initiating means being integrated in the commands entering means.
